# EUROPEAN PATENT APPLICATION

(11) **EP 4 407 525 A1**
(43) Date of publication of application: **31.07.2024**
(21) Application number: 21958361.4
(22) Date of filing: 22.09.2021
(51) Int. Cl.: G06N 20/00, G06N 5/04

(54) **INFORMATION PROCESSING DEVICE, METHOD, PROGRAM, AND SYSTEM**

(71) Applicant: Aising Ltd., Tokyo 107-0052 (JP)
(72) Inventor: SUGAWARA Shimon, Tokyo 107-0052 (JP); IDESAWA Junichi, Tokyo 107-0052 (JP)
(74) Representative: Kilian Kilian & Partner mbB
(86) International application number: PCT/JP2021/034775
(87) International publication number: WO 2023/047484

(57) **Abstract**

There is provided an information processing apparatus including: a readout section configured to read out a tree-structured learned model that is obtained by performing a learning process on a tree-structured model by using a first data set; a leaf node identification section configured to input a second data set to the tree-structured learned model and identify a first leaf node that is a leaf node corresponding to the second data set in the tree-structured learned model; and a ratio information generation section configured to generate information related to a ratio between a number of all leaf nodes of the tree-structured learned model, and a number of the first leaf nodes or a number of second leaf nodes. The second leaf nodes are leaf nodes that do not each correspond to the first leaf node among the leaf nodes of the tree-structured learned model.

## Description

### Technical Field

This invention relates to technology for evaluating a data set that is used for machine learning or the like.

### Background Art

It is desirable in some cases that the respective data distribution domains of a plurality of data sets be consistent or substantially the same.

For example, when machine learning is performed, a learning data set for generating a learned model and a validation data set for validating the learned model are used. At this time, it is desirable that the respective data distribution domains of the learning data set and the validation data set be as consistent as possible.

This is because it may be impossible to correctly evaluate the learned data domain by using the evaluation data set unless the distribution domain of the validation data set covers the whole of the data distribution domain of the learning data set.

Conversely, unless the distribution domain of the learning data set covers the whole of the data distribution domain of the validation data set, a domain that has not yet been learned has to be validated. After all, it may be impossible to carry out an appropriate evaluation.

Conventionally, a cross-validation technique exemplified in Non-Patent Literature 1 has been known as a technique that validates the consistency between these kinds of data sets. This kind of cross-validation technique indirectly evaluates the consistency of the data distribution domains from the consistency degree of an RMSE (root mean squared error) for an output of the learned model.

### Citation List

### Non-Patent Literature

Non-Patent Literature 1: CHRISTOPHER M. BISHOP, "PATTERN RECOGNITION and MACHINE LEARNING", Springer Science+Business Media, LLC, 2006, pp. 32 to 33

### Summary of Invention

### Technical Problem

However, with the evaluation that uses an RMSE or the like, it is not possible to directly evaluate the consistency of the data distribution domains between the respective data sets.

The present invention has been devised in view of the technical background described above, and an object of the present invention is to evaluate the consistency of distribution domains between a plurality of data sets.

Still another object, and workings and effects of the present invention would have been easily understood by those skilled in the art with reference to the following description herein.

### Solution to Problem

It is possible to solve the technical problem described above by using an information processing apparatus or the like having the following configurations.

In other words, an information processing apparatus includes: a readout section configured to read out a tree-structured learned model that is obtained by performing a learning process on a tree-structured model by using a first data set; a leaf node identification section configured to input a second data set to the tree-structured learned model and identify a first leaf node that is a leaf node corresponding to the second data set in the tree-structured learned model; and a ratio information generation section configured to generate information related to a ratio between a number of all leaf nodes of the tree-structured learned model, and a number of the first leaf nodes or a number of second leaf nodes. The second leaf nodes are leaf nodes that do not each correspond to the first leaf node among the leaf nodes of the tree-structured learned model.

According to such a configuration, it is possible to evaluate the consistency of the distribution domain of the second data set with the distribution domain of the first data set through the ratio of the first leaf nodes or the second leaf nodes to all the leaf nodes of the tree-structured learned model generated by using the first data set. In other words, according to such a configuration, it is possible to directly evaluate the consistency of the distribution domains between the respective data sets.

A condition output section may be further included. The condition output section is configured to output a branch condition corresponding to the second leaf node among the leaf nodes of the tree-structured learned model.

According to such a configuration, it is possible to easily grasp what data has to be added to allow the data distribution domain of the second data set and the data distribution domain of the first data set to come closer.

A data search section may be further included. The data search section is configured to search a predetermined database for a data set that satisfies the branch condition corresponding to the second leaf node.

According to such a configuration, it is possible to improve the second data set to cause the data distribution domains of the first data set and the second data set to come closer.

The branch condition may be a series of branch conditions from a root node to the second leaf node of the tree-structured learned model.

According to such a configuration, it is possible to objectively identify a condition of data to be added.

A count storage section may be further included. The count storage section is configured to store a number of times the second data set is associated for each of the leaf nodes of the tree-structured learned model.

According to such a configuration, it is possible to evaluate the sufficiency of the data distribution domain of the second data set for the distribution domain of the first data set and identify a branch condition that has insufficiently validated from the number of times stored for each leaf node. This makes it possible to easily improve the second data set.

A second condition output section may be further included. The second condition output section is configured to output a branch condition corresponding to a leaf node the number of times of which is smaller than or equal to a predetermined number of times among the first leaf nodes.

According to such a configuration, it is possible to identify a branch condition for a domain in which the second data set is not distributed. This makes it possible to easily improve the second data set.

An error generation section may be further included. The error generation section is configured to generate, for each of the leaf nodes of the tree-structured learned model, an inference error between an output based on the leaf node and a ground truth value.

According to such a configuration, it is possible to evaluate the inference accuracy of the tree-structured learned model in units of leaf nodes from the inference errors.

The first data set may be a learning data set and the second data set may be an evaluation data set.

According to such a configuration, it is possible to evaluate the consistency of the distribution domain of the evaluation data set with that of the learning data set.

The first data set may be an evaluation data set and the second data set may be a learning data set.

According to such a configuration, it is possible to evaluate the consistency of the distribution domain of the learning data set with that of the evaluation data set.

The first data set and the second data set may be derived from a same data set.

According to such a configuration, it is possible to evaluate the consistency of the distribution domains of the two data sets derived from the same data set.

The present invention as viewed from another aspect is an information processing system. The information processing system includes: a readout section configured to read out a tree-structured learned model that is obtained by performing a learning process on a tree-structured model by using a first data set; a leaf node identification section configured to input a second data set to the tree-structured learned model and identify a first leaf node that is a leaf node corresponding to the second data set in the tree-structured learned model; and a ratio information generation section configured to generate information related to a ratio between a number of all leaf nodes of the tree-structured learned model, and a number of the first leaf nodes or a number of second leaf nodes. The second leaf nodes are leaf nodes that do not each correspond to the first leaf node among the leaf nodes of the tree-structured learned model.

The present invention as viewed from another aspect is an information processing method. The information processing method includes: a readout step of reading out a tree-structured learned model that is obtained by performing a learning process on a tree-structured model by using a first data set; a leaf node identification step of inputting a second data set to the tree-structured learned model and identifying a first leaf node that is a leaf node corresponding to the second data set in the tree-structured learned model; and a ratio information generation step of generating information related to a ratio between a number of all leaf nodes of the tree-structured learned model, and a number of the first leaf nodes or a number of second leaf nodes. The second leaf nodes are leaf nodes that do not each correspond to the first leaf node among the leaf nodes of the tree-structured learned model.

The present invention as viewed from another aspect is an information processing program. The information processing program includes: a readout step of reading out a tree-structured learned model that is obtained by performing a learning process on a tree-structured model by using a first data set; a leaf node identification step of inputting a second data set to the tree-structured learned model and identifying a first leaf node that is a leaf node corresponding to the second data set in the tree-structured learned model; and a ratio information generation step of generating information related to a ratio between a number of all leaf nodes of the tree-structured learned model, and a number of the first leaf nodes or a number of second leaf nodes. The second leaf nodes are leaf nodes that do not each correspond to the first leaf node among the leaf nodes of the tree-structured learned model.

The present invention as viewed from another aspect is an information processing apparatus. The information processing apparatus includes: a readout section configured to read out a plurality of tree-structured learned models that is obtained by performing a learning process on a tree-structured model by using a first data set; a leaf node identification section configured to input a second data set to each of the tree-structured learned models and identify a first leaf node that is a leaf node corresponding to the second data set in each of the tree-structured learned models; and a ratio information generation section configured to generate, for each of the tree-structured learned models, information related to a ratio between a number of all leaf nodes of each of the tree-structured learned models, and a number of the first leaf nodes or a number of second leaf nodes. The second leaf nodes are leaf nodes that do not each correspond to the first leaf node among the leaf nodes of the tree-structured learned model.

The plurality of tree-structured learned models may be obtained through ensemble learning.

The ensemble learning may include bagging learning or boosting learning.

The bagging learning may include a random forest.

The present invention as viewed from another aspect is an information processing system. The information processing system includes: a readout section configured to read out a plurality of tree-structured learned models that is obtained by performing a learning process on a tree-structured model by using a first data set; a leaf node identification section configured to input a second data set to each of the tree-structured learned models and identify a first leaf node that is a leaf node corresponding to the second data set in each of the tree-structured learned models; and a ratio information generation section configured to generate, for each of the tree-structured learned models, information related to a ratio between a number of all leaf nodes of each of the tree-structured learned models, and a number of the first leaf nodes or a number of second leaf nodes. The second leaf nodes are leaf nodes that do not each correspond to the first leaf node among the leaf nodes of the tree-structured learned model.

The present invention as viewed from another aspect is an information processing method. The information processing method includes: a readout step of reading out a plurality of tree-structured learned models that is obtained by performing a learning process on a tree-structured model by using a first data set; a leaf node identification step of inputting a second data set to each of the tree-structured learned models and identifying a first leaf node that is a leaf node corresponding to the second data set in each of the tree-structured learned models; and a ratio information generation step of generating, for each of the tree-structured learned models, information related to a ratio between a number of all leaf nodes of each of the tree-structured learned models, and a number of the first leaf nodes or a number of second leaf nodes. The second leaf nodes are leaf nodes that do not each correspond to the first leaf node among the leaf nodes of the tree-structured learned model.

The present invention as viewed from another aspect is an information processing program. The information processing program includes: a readout step of reading out a plurality of tree-structured learned models that is obtained by performing a learning process on a tree-structured model by using a first data set; a leaf node identification step of inputting a second data set to each of the tree-structured learned models and identifying a first leaf node that is a leaf node corresponding to the second data set in each of the tree-structured learned models; and a ratio information generation step of generating, for each of the tree-structured learned models, information related to a ratio between a number of all leaf nodes of each of the tree-structured learned models, and a number of the first leaf nodes or a number of second leaf nodes. The second leaf nodes are leaf nodes that do not each correspond to the first leaf node among the leaf nodes of the tree-structured learned model.

### Advantageous Effect of Invention

According to the present invention, it is possible to directly evaluate the consistency of distribution domains between a plurality of data sets.

### Brief Description of Drawings

[Figure 1] Figure 1 is a functional block diagram of an information processing apparatus.
[Figure 2] Figure 2 is an operation flowchart related to a machine learning process.
[Figure 3] Figure 3 is a general flowchart related to an evaluation process.
[Figure 4] Figure 4 is a detailed flowchart of a condition identification process.
[Figure 5] Figure 5 is a conceptual diagram of the evaluation process.
[Figure 6] Figure 6 is an operation flowchart related to a machine learning process (third embodiment).
[Figure 7] Figure 7 is a general flowchart related to an evaluation process (third embodiment).
[Figure 8] Figure 8 is a general flowchart related to an evaluation process (modification example).
[Figure 9] Figure 9 is a conceptual diagram according to a modification example in which a count and an error are outputted.

### Description of Embodiments

The following describes an embodiment of the present invention in detail with reference to the appended drawings.

### (1. First Embodiment)

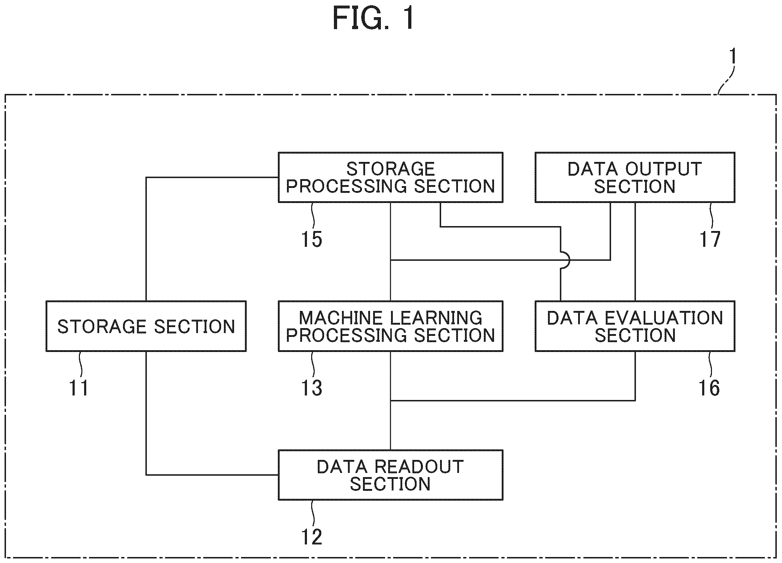

A first embodiment will be described with reference to Figures 1 to 5. An example in which the present invention is applied to an information processing apparatus will be described in the first embodiment. Here, the information processing apparatus is a computer including an arithmetic unit including a CPU or the like and a memory as described below. For example, the information processing apparatus includes a PC, a microcomputer, and the like. It is to be noted that functions corresponding to the information processing apparatus may be implemented as a circuit by an IC such as an FPGA.

### (1.1 Configuration)

Figure 1 is a functional block diagram of an information processing apparatus 1 according to the present embodiment. As is clear from Figure 1, the information processing apparatus 1 includes a storage section 11, a data readout section 12, a machine learning processing section 13, a storage processing section 15, a data evaluation section 16, and a data output section 17.

The storage section 11 is a storage device such as a ROM/RAM, a flash memory, or a hard disk. The data readout section 12 reads out predetermined data from the storage section 11 and provides the predetermined data to the machine learning processing section 13 or the data evaluation section 16.

The machine learning processing section 13 performs a machine learning process that uses a predetermined learning model on the basis of the predetermined data and generates a learned model. In the present embodiment, the machine learning process is a decision tree algorithm. The generated tree-structured learned model is stored in the storage section 11 through the storage processing section 15 or outputted to the data output section 17.

The storage processing section 15 performs a process of storing data generated by the machine learning processing section 13 or the data evaluation section 16 in the storage section 11.

The data evaluation section 16 reads out the learned model and an evaluation data set from the storage section 11, performs a process of evaluating the evaluation data set, and provides a result of the evaluation to the storage processing section 15 or the data output section 17.

The data output section 17 performs a process of outputting the provided data. In the present embodiment, the output is a visual output to an unillustrated display section such as a display, but may be made in another output manner. For example, the output may be an auditory output made through an unillustrated speaker or the like.

It is to be noted that the information processing apparatus 1 includes a control section such as a CPU or a GPU, a storage section, a communication section, an input section, a display control section, an I/O section, and the like as hardware. The storage section includes a ROM, a RAM, a hard disk, and/or a flash memory or the like. The communication section includes a communication unit or the like. The display control section is connected to a display or the like. The respective functions described above, that is, the data readout section 12, the machine learning processing section 13, the storage processing section 15, the data evaluation section 16, and the data output section 17 are implemented by the control section performing programs.

In addition, the hardware configuration according to the present invention is not limited to the hardware configuration described in the present embodiment. Thus, the information processing apparatus 1 is not a single apparatus, but may be configured as a system including a plurality of devices. In addition, the devices and the functions may be coupled through a network.

### (1.2 Operation)

Next, an operation of the information processing apparatus 1 will be described. The operation of the information processing apparatus 1 includes a machine learning process for generating a learned model and a process of evaluating an evaluation data set by using the generated learned model.

### (Machine Learning Process)

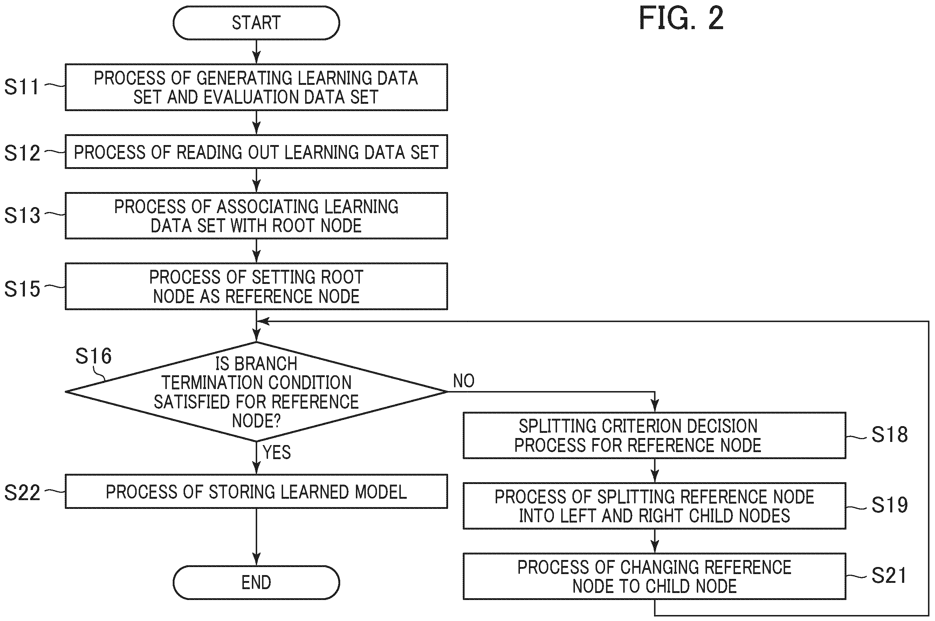

Figure 2 is an operation flowchart related to a machine learning process. As is clear from Figure 2, once the process starts, the data readout section 12 reads out a predetermined data set from the storage section 11. The machine learning processing section 13 takes out a predetermined number of pieces of data at random from this read-out data set while allowing for duplication. The machine learning processing section 13 hereby generates a learning data set (that may be referred to as a training data set) and an evaluation data set (that may be referred to as a validation data set or a test data set) (S11). The generated learning data set and evaluation data set are each stored in the storage section 11 by the storage processing section 15.

It is to be noted that the learning data set and the evaluation data set are generated by using one data set in the present embodiment, but the present invention is not limited to such a configuration. Thus, for example, the learning data set and the evaluation data set may be generated from different data sets.

In addition, the data set means a database table including a collection of pieces of unit data each including one of each piece of variable data in the present embodiment. Each piece of unit data includes at least one or more types of pieces of variable data to be used for input. It is to be noted that each piece of unit data may additionally include one or more types of pieces of variable data or the like corresponding to a ground truth output.

Next, the machine learning processing section 13 performs a process of reading out the generated learning data set and various parameters from the storage section 11 (S12). The parameters include, for example, a parameter related to the structure of a tree-structured model such as maximum depth. The read-out learning data set is associated with a root node that serves as a base end (S13).

After the learning data set is associated with a root node, the machine learning processing section 13 performs a process of setting the root node as a reference node (S15). After that, it is determined whether or not the reference node satisfies a branch termination condition (S16). It is to be noted that the branch termination condition means in the present embodiment that the reference node serves as a node having the maximum depth in the tree structure. In other words, the reference node serves as a leaf node.

When the reference node does not satisfy the branch termination condition (NO in S16), the machine learning processing section 13 performs a splitting criterion decision process for the reference node (S18). Any publicly known technique is adoptable for the splitting criterion decision process, but the splitting criterion decision process in the present embodiment is a process of performing splitting on the basis of a plurality of splitting criterion candidates selected at random and setting a splitting criterion candidate that offers a favorable splitting result as a final splitting criterion. It is to be noted that the favorability of a splitting result may be evaluated, for example, on the basis of the magnitude of information gain.

After the splitting criterion decision process, the machine learning processing section 13 performs a process of applying the splitting criterion, splitting the data set associated with the reference node into left and right child nodes of the reference node, and associating the split data sets with the respective child nodes (S19) .

After the splitting process, the machine learning processing section 13 performs a process of changing the reference node to a child node thereof (S21). After that, the flow returns to the process of determining the branch termination condition again (S16) and this process is then repeated (NO in S16) until the branch termination condition is satisfied.

In contrast, when the branch termination condition is satisfied for the reference node (YES in S16), the machine learning processing section 13 performs a process of storing the obtained tree-structured learned model in the storage section 11 in cooperation with the storage processing section 15 (S22). After that, the machine learning process ends.

In other words, the tree-structured learned model based on the decision tree algorithm is generated through the processes described above on the basis of the learning data set in the present embodiment.

### (Evaluation Process)

Next, a process of evaluating an evaluation data set by using a learned model generated on the basis of a learning data set will be described.

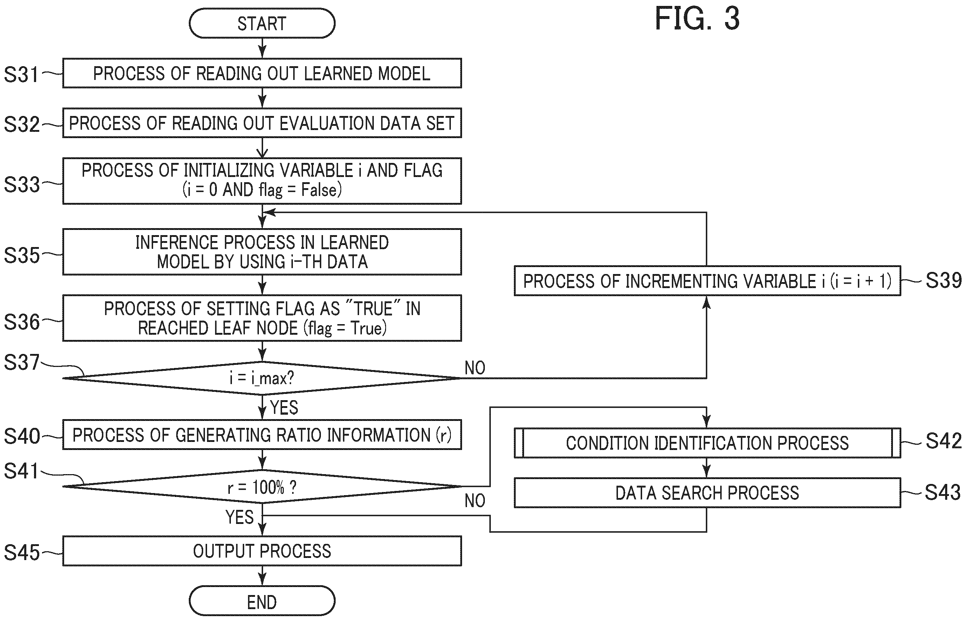

Figure 3 is a general flowchart related to the evaluation process. As is clear from Figure 3, once the process starts, the data readout section 12 performs a process of reading out a tree-structured learned model from the storage section 11 and providing the tree-structured learned model to the data evaluation section 16 (S31). In addition, the data readout section 12 performs a process of reading out an evaluation data set and providing the evaluation data set to the data evaluation section 16 (S32).

After the data readout processes, the data evaluation section 16 performs a process of initializing a variable i and a flag associated with each leaf node (S33). Specifically, a process of setting the variable i at 0 and the flag as false (False) is performed.

After the initialization process, an inference process in the tree-structured learned model is performed by using the i-th data of the data set (S35). More specifically, a process of following the tree-structured learned model from the root node in order by using one or more variables corresponding to the input of the i-th record, identifying a terminal leaf node, and calculating the output corresponding to the leaf node is performed. It is to be noted that a process of calculating an output corresponding to a leaf node is performed in the present embodiment, but the present invention is not limited to such a configuration. It is sufficient if a leaf node is simply identified.

In addition, the term inference means that an output is generated in the learned model. The term inference may be replaced, for example, with a wording such as prediction or estimation.

After the inference process, the data evaluation section 16 performs a process of changing the flag associated with the reached leaf node to "true (True)" (S36) .

The data evaluation section 16 repeats the inference process (S35) that uses the learned model and the flag process (S36) until the variable i reaches a predetermined maximum value (i_max) (NO in S37) while performing an increment process of increasing the variable i by 1 (S39).

When the variable i becomes equal to the maximum value (i_max) (S37), the data evaluation section 16 performs a process of generating ratio information (r) (S40). In the present embodiment, the ratio information is the value obtained by dividing the number of leaf nodes whose flags are changed to true by the number of all leaf nodes or the value obtained by multiplying that value by 100 (in percentage terms).

After the process of generating ratio information, the data evaluation section 16 determines whether or not the ratio information is equal to 1 or 1000 (S41). When the ratio information is equal to 1 or 100% in percentage terms, the data evaluation section 16 performs a process of outputting the ratio information that is 1 or 100% to the data output section 17 (S45).

In this case, the data output section 17 shows on the unillustrated display section or the like that the ratio information is 1 or 100%, that is, all the leaf nodes of the tree-structured learned model are used by using the evaluation data set.

In contrast, when the ratio information falls below 1 or 100% (NO in S41), the data evaluation section 16 performs a condition identification process (S42).

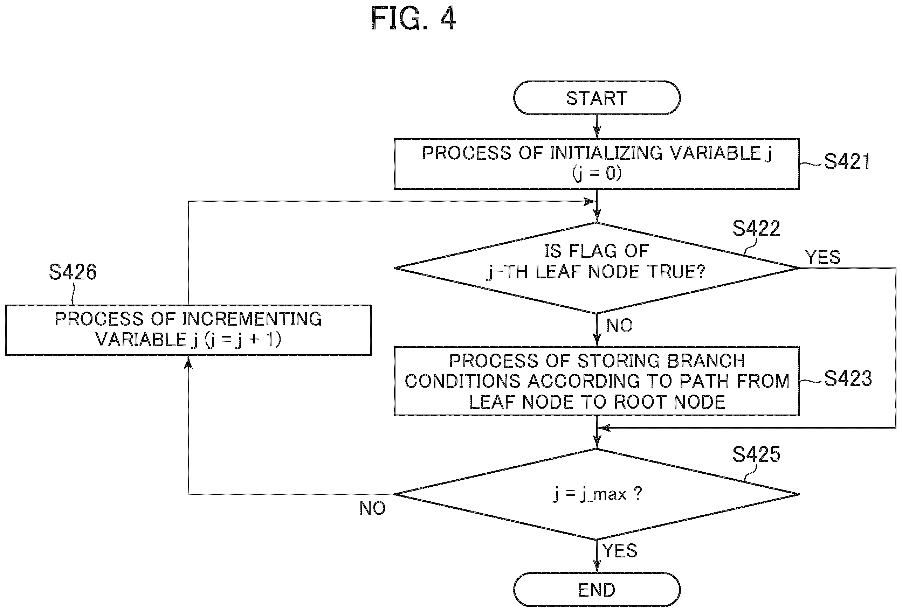

Figure 4 is a detailed flowchart of the condition identification process (S42). As is clear from Figure 4, once the process starts, the data evaluation section 16 performs a process of initializing a variable j for referring to leaf nodes in order (S421). Specifically, a process of setting the variable j at 0 is performed in the present embodiment.

After that, the data evaluation section 16 performs a process of determining whether or not the flag of the j-th leaf node is true (S422). When the flag of the j-th leaf node is not true, that is, the flag of the j-th leaf node is false (NO in S422), a process of storing the branch conditions according to the path from the leaf node to the root node is performed (S423). After this storage process, a process of determining whether or not the variable j is equal to a maximum value j_max is performed (S425).

In contrast, when the flag of the j-th leaf node is true (YES in S422), the data evaluation section 16 performs a process of determining whether or not the variable j is equal to the maximum value j_max (S425) without performing the storage process (S423).

When the variable j is equal to the maximum value j_max (YES in S425), the condition identification process ends. In contrast, when the variable j is smaller than the maximum value j_max, a process of incrementing the variable j by 1 is performed (S426) and the series of processes (S422 to S425) are executed again.

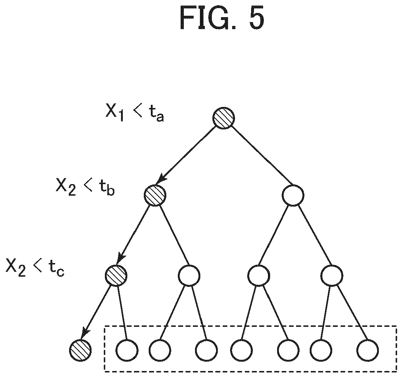

Figure 5 is a conceptual diagram of the evaluation process. In Figure 5, the nodes from the uppermost root node to the lowermost leaf nodes are each disposed to branch into two. In addition, it is assumed in the example of Figure 5 that the flags of the lowermost leaf node positioned at the second from the left to all the leaf nodes on the right thereof, that is, the leaf nodes surrounded by the dashed rectangle are true as a result of an inference process performed in the tree-structured learned model by using an evaluation data set (S31 to S41). In other words, the ratio information (r) is 0.875 or 87.5% (= 7/8 × 100).

When the condition identification process (S42) is executed at this time, only the flag related to the lowermost leaf node positioned the farthest to the left in Figure 5 is not true. A process of storing the branch conditions according to the path from the leaf node to the root node is thus executed (S421 to S426). Specifically, in the example of Figure 5, a process of storing "x₂ < t_{c} (< t_{b})" and "x₁ < tₐ" as branch conditions is performed.

Figure 3 will be referred to again. When the condition identification process (S42) ends, the data evaluation section 16 performs a data search process (S43). In the present embodiment, the data evaluation section 16 performs a process of searching the predetermined data set described above for data that meets the branch conditions stored through the condition identification process.

After that, the data evaluation section 16 executes a process of outputting the ratio information, the branch conditions according to the path from a leaf node whose flag is false to the root node, and a candidate for the additional data resulting from the search of the data set to the data output section 17 (S45).

In this case, the data output section 17 shows the ratio information, the branch conditions according to the path from the leaf node whose flag is false to the root node, and the candidate for the additional data on the unillustrated display section or the like. For example, in the example of Figure 5, 87.5% is shown as the ratio information, "x₂ < t_{c} (< t_{b})" and "x₁ < tₐ" are shown as the branch conditions, and the additional data candidate that satisfies the conditions above is shown. In other words, it is shown that a portion of the leaf nodes of the tree-structured learned model is not used even by using the evaluation data set, and a missing-data condition and the additional data candidate are shown.

It is to be noted that the showing manner is not limited to such a manner. Thus, for example, they may be shown along with a figure, a graph, and the like in addition to a character.

In addition, in the present embodiment, a data output configuration is adopted in which data resulting from a search is outputted as an additional data candidate, but the present invention is not limited to such a configuration. The additional data candidate may be thus directly added to the evaluation data set.

According to such a configuration, it is possible to evaluate the consistency of the distribution domain of the evaluation data set with the distribution domain of the learning data set through the ratio of the leaf nodes corresponding to the evaluation data set to all the leaf nodes of the tree-structured learned model generated by using the learning data set. In other words, such a configuration makes it possible to directly evaluate the consistency of the distribution domains between the respective data sets.

In addition, according to such a configuration, it is possible to easily grasp what data has to be added to allow the data distribution domain of the evaluation data set and the data distribution domain of the learning data set to come closer.

Further, according to such a configuration, because a presentation or the like is made by doing a data search, it is possible to improve the evaluation data set to cause the data distribution domains of the learning data set and the evaluation data set to come closer.

### (2. Second Embodiment)

A process of evaluating an evaluation data set is performed in the first embodiment by using a learned model that is generated on the basis of a learning data set. A process of evaluating a learning data set is performed in the present embodiment by using a learned model that is generated on the basis of an evaluation data set.

### (2.1 Configuration)

A hardware configuration according to the present embodiment is substantially the same as that of the first embodiment. A detailed description will be thus omitted.

### (2.2 Operation)

An operation according to the present embodiment is different only in that an evaluation data set is used in a scene in which a learning data set is used in the first embodiment and a learning data set is used in a scene in which an evaluation data set is used in the first embodiment. In other words, a process of evaluating a learning data set is performed by using a learned model that is generated on the basis of an evaluation data set. A detailed description will be thus omitted.

According to such a configuration, it is possible to evaluate the consistency of the distribution domain of the learning data set with the distribution domain of the evaluation data set through the ratio of the leaf nodes corresponding to the learning data set to all the leaf nodes of the tree-structured learned model generated by using the evaluation data set. In other words, such a configuration makes it possible to directly evaluate the consistency of the distribution domains between the respective data sets.

In addition, according to such a configuration, it is possible to easily grasp what data has to be added to allow the data distribution domain of the learning data set and the data distribution domain of the evaluation data set to come closer.

Further, according to such a configuration, a presentation or the like is made by doing a data search. This makes it possible to improve the learning data set to cause the data distribution domains of the evaluation data set and the learning data set to come closer.

### (3. Third Embodiment)

The present invention is also applicable to each of learned models obtained from an ensemble learning algorithm that offers a plurality of tree-structured learned models. In the present embodiment, an example will be thus described in which the present invention is applied to a learned model obtained from bagging learning, for example, a random forest algorithm. It is to be noted that the ensemble learning includes bagging learning and boosting learning including a plurality of tree-structured models.

### (3.1 Configuration)

The hardware configuration according to the present embodiment and the hardware configuration according to the first embodiment are substantially the same. A detailed description will be thus omitted.

However, in the present embodiment, the machine learning processing section 13 performs a machine learning process as described below by using a random forest algorithm that generates a plurality of decision trees. In addition, as described below, the data evaluation section 16 performs a process of evaluating an evaluation data set for evaluating a plurality of decision trees included in the random forest.

### (3.2 Operation)

The operation of the information processing apparatus 1 also includes a machine learning process for generating a learned model and a process of evaluating an evaluation data set by using the generated learned model in the present embodiment as in the first embodiment.

### (Machine Learning Process)

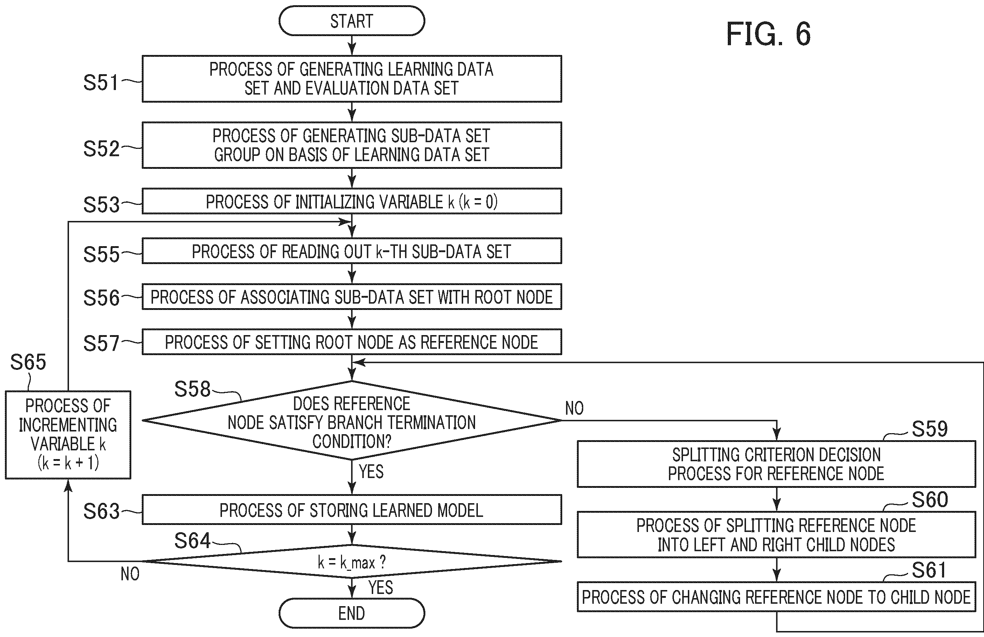

Figure 6 is an operation flowchart related to a machine learning process according to the present embodiment. As is clear from Figure 6, the overall flow of the machine learning process is substantially the same as that of the first embodiment. The present embodiment is, however, different from the first embodiment in the following points.

In other words, after a process of generating a learning data set and an evaluation data set (S51), a process of generating a sub-data set group from the learning data set is performed in the present embodiment (S52). This sub-data set group is configured by selecting and extracting a predetermined number of pieces of data from the learning data set while allowing for duplication.

After that, the machine learning processing section 13 reads out the k-th sub-data set and various parameters (S55). After that, the machine learning processing section 13 performs processes of generating a learned model on the basis of the k-th sub-data set and storing the learned model (S56 to S63) as in the first embodiment (S13 to S22).

The machine learning processing section 13 repeatedly performs such processes of generating and storing learned models for the number of sub-data sets (NO in S64) while incrementing a variable k by 1 (S65). In addition, when it is determined that the processes of generating and storing learned models are performed for the number of sub-data sets (YES in S64), the machine learning process ends.

In other words, according to such a configuration, tree-structured learned models (learned decision trees) included in a random forest are generated for a predetermined number of respective sub-data sets generated from a learning data set.

### (Evaluation Process)

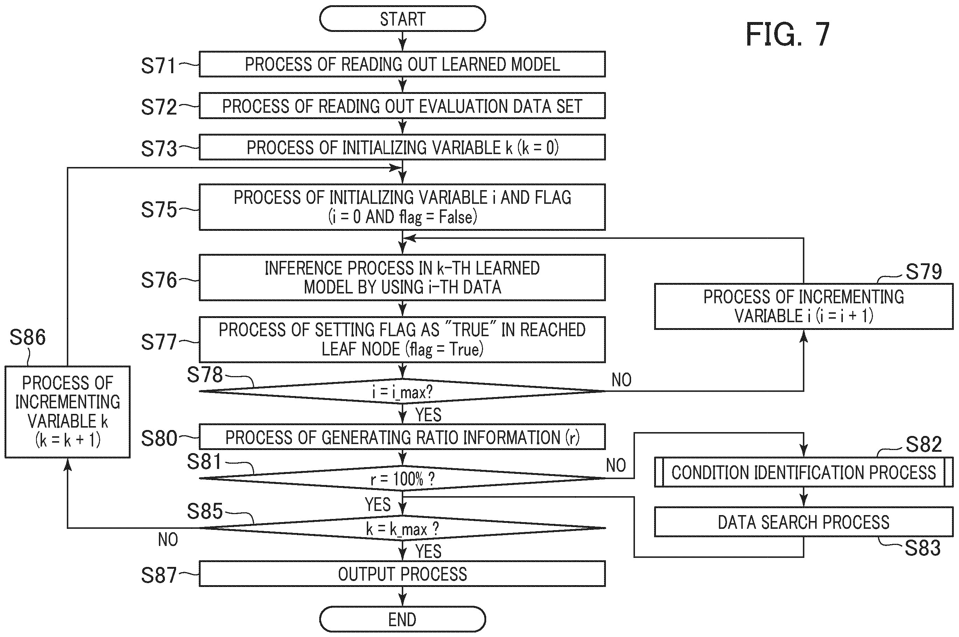

Figure 7 is a general flowchart related to an evaluation process according to the present embodiment. As is clear from Figure 7, the overall flow of the evaluation process is substantially the same as that of the first embodiment. The present embodiment is, however, different from the first embodiment in the following points.

The data evaluation section 16 performs a process of reading out the plurality of generated tree-structured learned models (S71). After this readout process, the data evaluation section 16 performs a process of reading out an evaluation data set (S72). After that, the data evaluation section 16 performs a process of initializing the variable k, that is, a process of setting k at 0 (S73) .

After this initialization process, processes of inputting data according to the evaluation data set to the k-th learned model to perform an inference process and setting the flag as true at the reached leaf node are performed as in the first embodiment (S75 to S78).

After that, the data evaluation section 16 performs a process of generating ratio information (S80). When this ratio information is not 1 or 100% (NO in S81), a condition identification process and a data search process are performed (S82 to S83). In contrast, when the ratio information is 1 or 100% (YES in S81), the process on the k-th learned model ends.

The data evaluation section 16 repeats this series of processes (S75 to S83) for the number of sub-data sets (NO in S85) while incrementing the variable k by 1 (S86). In addition, when it is determined that the series of processes are performed for the number of sub-data sets (YES in S85), an output process is executed (S87) and the process ends.

More specifically, in the output process, the data evaluation section 16 executes, for every learned tree structure, a process of outputting the ratio information, the branch conditions according to the path from a leaf node whose flag is false to the root node, and a candidate for the additional data resulting from the search of the data set to the data output section 17.

In this case, the data output section 17 shows the ratio information, the branch conditions according to the path from a leaf node whose flag is false to the root node if there is any leaf node whose flag is false, and the candidate for the additional data on the unillustrated display section or the like for each tree-structured learned model. At this time, duplicate branch conditions, pieces of duplicate additional data, or the like may be collectively shown as appropriate. In other words, the use of an evaluation data set makes it possible to show how many leaf nodes are used in each tree-structured learned model, and show a missing-data condition and an additional data candidate.

According to such a configuration, even with a configuration in which a plurality of tree-structured learned models is included, it is possible to evaluate the consistency of the distribution domain of the evaluation data set with the distribution domain of the learning data set through the ratio of the leaf nodes corresponding to the evaluation data set to all the leaf nodes of the tree-structured learned model generated by using the learning data set. In other words, such a configuration makes it possible to directly evaluate the consistency of the distribution domains between the respective data sets.

In addition, according to such a configuration, it is possible to easily grasp what data has to be added to allow the data distribution domain of the evaluation data set and the data distribution domain of the learning data set to come closer.

Further, according to such a configuration, a presentation or the like is made by doing a data search. This makes it possible to improve the evaluation data set to cause the data distribution domains of the learning data set and the evaluation data set to come closer.

It is to be noted that the technique according to the present embodiment is applicable to a learning technique that uses a plurality of tree-structured learned models as is clear to those skilled in the art. Thus, the technique according to the present embodiment is also applicable to another ensemble learning technique.

### (4. Modification Examples)

The present invention is not limited to the embodiments described above, but may be modified and carried out in various manners.

In the evaluation process according to any of the embodiments described above, the data evaluation section 16 performs only a process of setting, as true, the flag of a leaf node reached upon receiving an inference data set (S33 to S37 and S75 to S79), but the present invention is not limited to such a configuration. Thus, for example, an additional process, for example, a process of storing and presenting the number of times a leaf node is reached and the inference error at that time may be added to allow for a further detailed analysis.

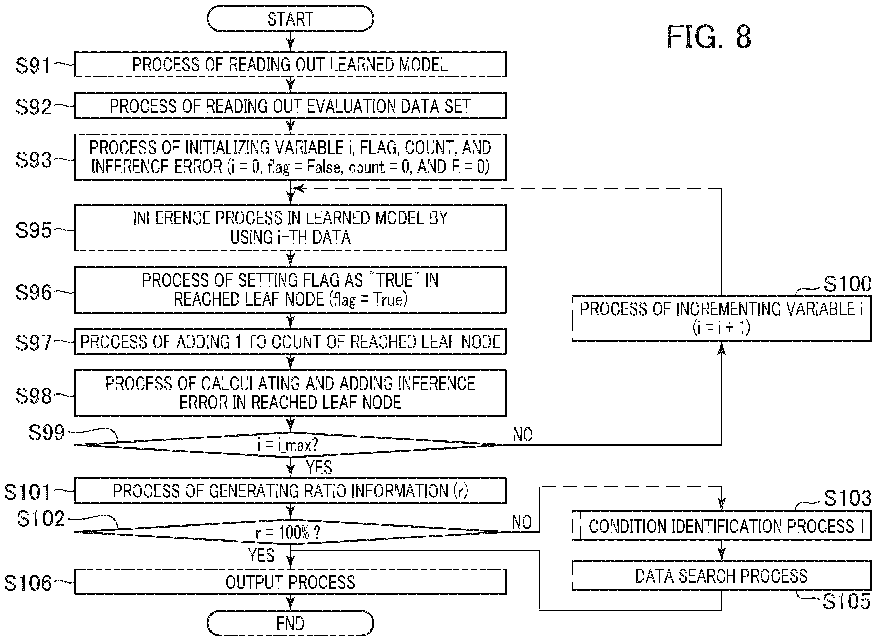

Figure 8 is a general flowchart related to an evaluation process according to a modification example. As is clear from Figure 8, the overall flow of the evaluation process is substantially the same as that of the first embodiment. The flowchart according to the present modification example is, however, different from that of the first embodiment in the following points.

In the present modification example, a variable count corresponding to each leaf node and indicating the number of times the leaf node is reached and an inference error E between an output based on the leaf node and a ground truth value are included as variables in addition to i and a flag. Thus, after a process of reading out the evaluation data set is performed, a process of initializing the count and the inference error is performed in addition to the variable i and the flag. For example, a process of setting the count at 0 and the error at 0 is performed.

After that, as in the first embodiment, an inference process (S95) in a learned model and a flag process (S96) at a reached leaf node are performed. After that, a process of adding 1 to the count of the reached leaf node is performed (S97).

In addition, after the addition process on the count, a process of calculating the inference error at the reached leaf node and adding the calculated inference error to the inference error related to the leaf node is performed (S98). The inference error is calculated as a difference between an output value calculated from data associated with the leaf node reached as a result of branching and the corresponding ground truth data of the evaluation data set. As an example, in the present embodiment, the output value is calculated as the arithmetic mean of the data associated with the leaf node reached as a result of branching.

After that, the data evaluation section 16 executes the series of processes on all the pieces of data of the evaluation data set (S95 to S99) and performs a process of generating ratio information (S101) after the completion thereof as in the first embodiment.

When the ratio information is 1 or 1000 (YES in S102) or when the ratio information is smaller than 1 or 100% (NO in S102 and S103 to S105), an output similar to that of the first embodiment is made in any case. However, in the present embodiment, the value of the count and the inference error are further outputted (S106).

In other words, the data output section 17 makes not only the outputs according to any of the embodiments described above on the display section or the like, but also makes, for each leaf node, an output indicating how many pieces of data reach the leaf node and outputs the inference error of each leaf node.

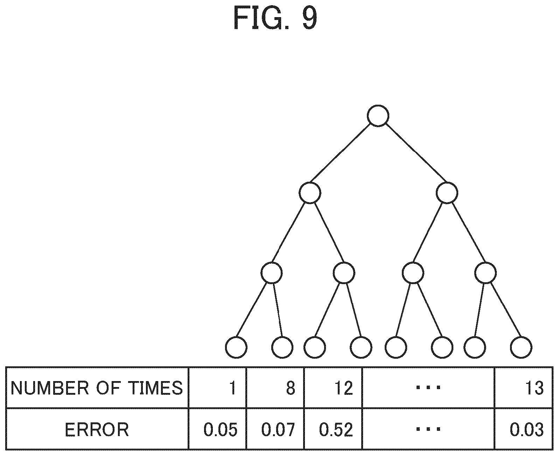

Figure 9 is a conceptual diagram according to a modification example in which a count and an inference error are outputted together in an evaluation process. In Figure 9, the nodes from the uppermost root node to the lowermost leaf nodes are each disposed to branch into two. In addition, a table is disposed below the tree structure. The table includes, for each of the leaf nodes, a count indicating the number of times the leaf node is reached and the inference error. The value of the count makes it possible to grasp which leaf node is used to what degree by an evaluation data set. In addition, it is possible to grasp the inference error or inference accuracy in units of leaf nodes on the basis of the cumulative value of the inference errors.

For example, the lowermost leaf node positioned the farthest to the left has a count of 1 and an inference error of 0.05. These values allow a user or the like to grasp that the inference error of the leaf node is smaller than the inference error of another leaf node, but the number of times the leaf node is validated is small. This makes it possible to confirm the branch condition corresponding the leaf node and identify data to be acquired.

In addition, in another example, the lowermost leaf node positioned at the third from the left has a count of 12 and an inference error of 0.52. These values allow a user or the like, for example, to confirm whether any of a learning data set or an evaluation data set related to the leaf node includes an abnormal value or the like because the number of times the leaf node is validated is large, but the value of the inference error is large.

In other words, according to such a configuration, it is possible to provide an objective evaluation index for bringing the data distribution area of an evaluation data set closer to the data distribution area of a learning data set.

In addition, according to such a configuration, it is possible to evaluate the consistency of the data distribution area of the evaluation data set for the data distribution area of the learning data set and identify a branch condition that has insufficiently validated from the number of times stored for each leaf node. This makes it possible to easily improve the validation data set.

Further, according to such a configuration, it is possible to evaluate the inference accuracy of the tree-structured learned model in units of leaf nodes from the inference errors.

It is to be noted that the present modification example may have a configuration in which, for example, the branch condition for a leaf node having the number of times smaller than or equal to a predetermined number of times is outputted together. Such a configuration makes it possible to easily identify a branch condition related to data for improving a validation data set.

In the first embodiment, the configuration has described in which a process of evaluating a validation data set is performed by using a learned model generated by using a learning data set. In the second embodiment, the configuration has described in which a process of evaluating a learning data set is performed by using a learned model generated by using an evaluation data set. The present invention is not, however, limited to such configurations. Thus, pieces of data necessary for the respective data sets may be added, for example, by alternately repeating a process according to the first embodiment and a process according to the second embodiment.

According to such a configuration, it is possible to bring closer the data distribution domains of a learning data set and an evaluation data set.

The embodiments of the present invention have been described above, but the embodiments described above exhibit merely a portion of application examples of the present invention. This does not intend to limit the technical scope of the present invention to the specific configurations according to the embodiments described above. In addition, it is possible to combine the embodiments described above as appropriate as long as it is possible to avoid inconsistency.

### Industrial Applicability

It is possible to use the present invention for various kinds of industry and the like that use machine learning technology.

### Reference Signs List

1 information processing apparatus
11 storage section
12 data readout section
13 machine learning processing section
15 storage processing section
16 data evaluation section
17 data output section

## Claims

1. An information processing apparatus comprising:
a readout section configured to read out a tree-structured learned model that is obtained by performing a learning process on a tree-structured model by using a first data set;
a leaf node identification section configured to input a second data set to the tree-structured learned model and identify a first leaf node that is a leaf node corresponding to the second data set in the tree-structured learned model; and
a ratio information generation section configured to generate information related to a ratio between a number of all leaf nodes of the tree-structured learned model, and a number of the first leaf nodes or a number of second leaf nodes, the second leaf nodes being leaf nodes that do not each correspond to the first leaf node among the leaf nodes of the tree-structured learned model.

2. The information processing apparatus according to claim 1, further comprising a condition output section configured to output a branch condition corresponding to the second leaf node among the leaf nodes of the tree-structured learned model.

3. The information processing apparatus according to claim 2, further comprising a data search section configured to search a predetermined database for a data set that satisfies the branch condition corresponding to the second leaf node.

4. The information processing apparatus according to claim 2 or 3, wherein the branch condition is a series of branch conditions from a root node to the second leaf node of the tree-structured learned model.

5. The information processing apparatus according to any one of claims 1 to 4, further comprising a count storage section configured to store the number of times the second data set is associated for each of the leaf nodes of the tree-structured learned model.

6. The information processing apparatus according to claim 5, further comprising a second condition output section configured to output a branch condition corresponding to a leaf node the number of times of which is smaller than or equal to a predetermined number of times among the first leaf nodes.

7. The information processing apparatus according to any one of claims 1 to 6, further comprising an error generation section configured to generate, for each of the leaf nodes of the tree-structured learned model, an inference error between an output based on the leaf node and a ground truth value.

8. The information processing apparatus according to any one of claims 1 to 7, wherein the first data set is a learning data set and the second data set is an evaluation data set.

9. The information processing apparatus according to any one of claims 1 to 7, wherein the first data set is an evaluation data set and the second data set is a learning data set.

10. The information processing apparatus according to any one of claims 1 to 9, wherein the first data set and the second data set are derived from a same data set.

11. An information processing system comprising:
a readout section configured to read out a tree-structured learned model that is obtained by performing a learning process on a tree-structured model by using a first data set;
a leaf node identification section configured to input a second data set to the tree-structured learned model and identify a first leaf node that is a leaf node corresponding to the second data set in the tree-structured learned model; and
a ratio information generation section configured to generate information related to a ratio between a number of all leaf nodes of the tree-structured learned model, and a number of the first leaf nodes or a number of second leaf nodes, the second leaf nodes being leaf nodes that do not each correspond to the first leaf node among the leaf nodes of the tree-structured learned model.

12. An information processing method comprising:
a readout step of reading out a tree-structured learned model that is obtained by performing a learning process on a tree-structured model by using a first data set;
a leaf node identification step of inputting a second data set to the tree-structured learned model and identifying a first leaf node that is a leaf node corresponding to the second data set in the tree-structured learned model; and
a ratio information generation step of generating information related to a ratio between a number of all leaf nodes of the tree-structured learned model, and a number of the first leaf nodes or a number of second leaf nodes, the second leaf nodes being leaf nodes that do not each correspond to the first leaf node among the leaf nodes of the tree-structured learned model.

13. An information processing program comprising:
a readout step of reading out a tree-structured learned model that is obtained by performing a learning process on a tree-structured model by using a first data set;
a leaf node identification step of inputting a second data set to the tree-structured learned model and identifying a first leaf node that is a leaf node corresponding to the second data set in the tree-structured learned model; and
a ratio information generation step of generating information related to a ratio between a number of all leaf nodes of the tree-structured learned model, and a number of the first leaf nodes or a number of second leaf nodes, the second leaf nodes being leaf nodes that do not each correspond to the first leaf node among the leaf nodes of the tree-structured learned model.

14. An information processing apparatus comprising:
a readout section configured to read out a plurality of tree-structured learned models that is obtained by performing a learning process on a tree-structured model by using a first data set;
a leaf node identification section configured to input a second data set to each of the tree-structured learned models and identify a first leaf node that is a leaf node corresponding to the second data set in each of the tree-structured learned models; and
a ratio information generation section configured to generate, for each of the tree-structured learned models, information related to a ratio between a number of all leaf nodes of each of the tree-structured learned models, and a number of the first leaf nodes or a number of second leaf nodes, the second leaf nodes being leaf nodes that do not each correspond to the first leaf node among the leaf nodes of the tree-structured learned model.

15. The information processing apparatus according to claim 14, wherein the plurality of tree-structured learned models is obtained through ensemble learning.

16. The information processing apparatus according to claim 15, wherein the ensemble learning includes bagging learning or boosting learning.

17. The information processing apparatus according to claim 16, wherein the bagging learning includes a random forest.

18. An information processing system comprising:
a readout section configured to read out a plurality of tree-structured learned models that is obtained by performing a learning process on a tree-structured model by using a first data set;
a leaf node identification section configured to input a second data set to each of the tree-structured learned models and identify a first leaf node that is a leaf node corresponding to the second data set in each of the tree-structured learned models; and
a ratio information generation section configured to generate, for each of the tree-structured learned models, information related to a ratio between a number of all leaf nodes of each of the tree-structured learned models, and a number of the first leaf nodes or a number of second leaf nodes, the second leaf nodes being leaf nodes that do not each correspond to the first leaf node among the leaf nodes of the tree-structured learned model.

19. An information processing method comprising:
a readout step of reading out a plurality of tree-structured learned models that is obtained by performing a learning process on a tree-structured model by using a first data set;
a leaf node identification step of inputting a second data set to each of the tree-structured learned models and identifying a first leaf node that is a leaf node corresponding to the second data set in each of the tree-structured learned models; and
a ratio information generation step of generating, for each of the tree-structured learned models, information related to a ratio between a number of all leaf nodes of each of the tree-structured learned models, and a number of the first leaf nodes or a number of second leaf nodes, the second leaf nodes being leaf nodes that do not each correspond to the first leaf node among the leaf nodes of the tree-structured learned model.

20. An information processing program comprising:
a readout step of reading out a plurality of tree-structured learned models that is obtained by performing a learning process on a tree-structured model by using a first data set;
a leaf node identification step of inputting a second data set to each of the tree-structured learned models and identifying a first leaf node that is a leaf node corresponding to the second data set in each of the tree-structured learned models; and
a ratio information generation step of generating, for each of the tree-structured learned models, information related to a ratio between a number of all leaf nodes of each of the tree-structured learned models, and a number of the first leaf nodes or a number of second leaf nodes, the second leaf nodes being leaf nodes that do not each correspond to the first leaf node among the leaf nodes of the tree-structured learned model.
